# EUROPEAN PATENT APPLICATION

(11) **EP 4 588 814 A1**
(43) Date of publication of application: **23.07.2025**
(21) Application number: 24169624.4
(22) Date of filing: 11.04.2024
(51) Int. Cl.: B65B 69/00

(54) **AN APPARATUS AND METHOD FOR MECHANICALLY SEPARATING A SUBSTANCE FROM AN ENCLOSED POUCH CONTAINING THE SUBSTANCE**

(30) Priority: 19.01.2024 PK 422024
(71) Applicant: Nicoventures Trading Limited, London WC2R 3LA (GB)
(72) Inventor: AHMED, Sarfraz, 44000 Islamabad (PK); KHALID, Hassan, 44000 Islamabad (PK); MIRZA, Muhammad Irfan, 44000 Islamabad (PK); ALI, Muhammad, 44000 Islamabad (PK); PARAMORE, Daryl, 34018 San Dorligo della Valle TS (IT); ALAM, Jahangir, London, WC2R 3LA (GB); SHAHID, Moulood Ahmad, Lahore (PK); KWIATKOWSKI, Marcin, 15-204 BIALYSTOK (PL)
(74) Representative: Ridley, Daniel

(57) **Abstract**

An apparatus for mechanically separating a substance from an enclosed pouch containing the substance. The apparatus comprises an opener configured to open the enclosed pouch so as to provide an opened pouch for the release of the substance therefrom and a separator configured to separate the substance from the opened pouch.

## Description

### Technical Field

The present invention relates to an apparatus and a method for mechanically separating a substance from an enclosed pouch containing the substance. In particular, but not exclusively, the present invention may relate to an apparatus and a method for mechanically separating a powder, such as nicotine powder, from an enclosed pouch containing the powder.

### Background

Pouches can contain valuable substances within them, for example nicotine pouches contain nicotine powder. Presently, if during their manufacture, pouches fail quality control, for example because of a failure in their construction, due to discoloration or due to any such defect, they are disposed of and thus the substance within them is also disposed of with the pouches. This represents a significant material and financial waste. It would therefore be advantageous if the substance within the pouches could be recovered. The substance could then be re-used and provided in new pouches. The pouches could be opened manually but this is slow, inefficient and costly and so this is not a viable solution to the problem.

There therefore exists a need for providing an improved way of recovering the substance within the pouches.

### Summary

In accordance with some embodiments described herein, there is provided an apparatus for mechanically separating a substance from an enclosed pouch containing the substance, the apparatus comprising:
an opener configured to open the enclosed pouch so as to provide an opened pouch for the release of the substance therefrom; and
a separator configured to separate the substance from the opened pouch.

Optionally, the substance is a power, which optionally may comprise nicotine or may be nicotine powder. Optionally, the substance is an aerosol-generating material, such as tobacco. In some embodiments, the invention may instead relate to an apparatus for mechanically separating a substance from an enclosed container containing the substance.

Optionally, the opener is a cutter configured to cut the enclosed pouch.

Optionally, the cutter is configured to cut the enclosed pouch longitudinally.

Optionally, the cutter comprises a rotatable cutting disc comprising a circumferentially extending cutting blade.

Optionally, the apparatus further comprises a cutting disc cleaner, wherein the cutting disc cleaner comprises a slot and wherein the cutting disc cleaner is arranged such that a circumferential portion or segment of the cutting disc is provided within the slot so as to cause debris to be removed from the cutting disc upon rotation of the cutting disc.

Optionally, the cutter further comprises a roller spaced apart from the cutting disc so as to define a cutting zone therebetween. Optionally, the cutting zone is configured to cut a single enclosed pouch at a time. Optionally, the roller comprises a circumferentially extending groove and wherein the roller is arranged such that a circumferential portion or segment of the cutting disc is received within the circumferentially extending groove of the roller, optionally wherein the groove is V-shaped.

Optionally, the apparatus further comprises a roller cleaner configured to remove debris and/or opened pouches from the roller, optionally wherein the roller cleaner comprises a projection configured to correspond to the groove of the roller and configured to be received therewithin so as to remove debris and/or opened pouches from the groove of the roller upon rotation of the roller.

Optionally, the apparatus further comprises a drive for driving the rotation of the cutting disc and/or the roller.

Optionally, the apparatus further comprises a feeder configured to feed the enclosed pouch to the opener.

Optionally, the feeder comprises a gate or restriction for controlling the feed of enclosed pouches to the opener, optionally wherein the gate or restriction is variable so as to varyingly control the feed of enclosed pouches to the opener.

Optionally, the feeder comprises a conveyance path configured to convey the enclosed pouch to the opener. Optionally, the conveyance path comprises a continuous conveyance belt for conveying the enclosed pouch thereupon and to the opener.

Optionally, the feeder comprises a sensor configured to detect the presence, weight, height and/or volume of enclosed pouches fed by, or within, the feeder and wherein the sensor is operably connected to a controller configured to the control the drive based on the detected presence, weight, height and/or volume.

Optionally, the controller is configured to cause the drive to drive the rotation of the cutting disc when the detected presence, weight, height and/or volume exceeds a predetermined value. Optionally, the controller is configured to drive a motor of a thresher when the detected presence, weight, height and/or volume exceeds a predetermined value.

Optionally, the feeder comprises a feed bowl comprising a feed bowl base, a feed bowl exit, a helical (e.g. spiral) inclined surface extending from the feed bowl base to the feed bowl exit, and wherein the feeder comprises a feed bowl vibrator configured to vibrate the feed bowl so as to cause the enclosed pouch to be transported along the inclined surface to the feed bowl exit.

Optionally, the conveyance path is configured to longitudinally align the enclosed pouch with respect to the cutting blade.

Optionally, the drive is configured to rotate the cutting disc in the same direction as the direction of movement of the enclosed pouch past the cutting disc.

Optionally, the conveyance path is configured to receive an enclosed pouch from the feed bowl exit, optionally wherein the conveyance path is configured to receive one enclosed pouch at a time.

Optionally, the conveyance path comprises a plurality of separate conveyance paths. Optionally, each conveyance path is configured to receive an enclosed pouch from the feed bowl exit. Optionally, each conveyance path is configured to receive one enclosed pouch at a time. Optionally, each conveyance path is separated from another by a divider therebetween. Optionally, each conveyance path comprises a respective continuous belt for conveying an enclosed pouch thereupon to the cutter.

Optionally, the cutter comprises a plurality of cutting blades wherein each of the plurality of cutting blades is aligned with a respective conveyance path.

Optionally, the each of the plurality of cutting blades comprises a plurality of rotatable cutting discs, optionally wherein the apparatus further comprises a drive for driving the rotation of each of the cutting discs.

Optionally, the apparatus further comprises a cutting disc cleaner comprising a plurality of slots and wherein the cutting disc cleaner is arranged such that a circumferential portion or segment of each of the cutting discs is received within a respective slot so as to cause debris to be removed from each of the cutting discs upon rotation of each respective cutting disc, e.g. by a portion of segment of each of the cutting discs scraping past the cutting disc cleaner.

Optionally, the apparatus comprises a roller spaced apart from the plurality of cutting discs so as to define respective cutting zones therebetween. Optionally, each cutting zone is configured to cut a single enclosed pouch at a time. Optionally, the roller comprises a plurality of circumferentially extending grooves and wherein the roller is arranged such that a circumferential portion or segment of each of the plurality of cutting blades is provided within a respective circumferentially extending groove of the roller. Optionally, the grooves are substantially V-shaped.

Optionally, the apparatus further comprises a roller cleaner configured to remove debris and/or opened pouches from the roller. Optionally, the roller cleaner comprises a plurality of projections configured to correspond to respective grooves of the roller and configured to be received therewithin so as to remove debris and/or opened pouches from the plurality of grooves of the roller upon rotation of the roller.

Optionally, the opener is a thresher, wherein the thresher comprises at least one thresher blade configured to rupture the enclosed pouch.

Optionally, the thresher comprises a rotor and wherein the thresher blade is configured to rotate about a rotor rotational axis.

Optionally, the rotor comprises a plurality of such thresher blades, optionally wherein each of the plurality of thresher blades is angularly equispaced, e.g. about the rotor rotational axis.

Optionally, the thresher comprises a drive configured to drive the rotation of the rotor.

Optionally, the thresher comprises a pouch inlet arranged above the thresher blade such that a pouch path extends from the pouch inlet into the thresher and intersects with a path of the thresher blade. Optionally, the thresher is configured such that the enclosed pouch is caused to travel along the pouch path partially or wholly under the effect of gravity. Optionally wherein the thresher is configured such that an enclosed pouch is caused to freefall from the pouch inlet into a path of the thresher blade. Optionally, the pouch inlet is arranged vertically above a path of the thresher blade.

Optionally, the thresher comprises a thresher pouch outlet for supplying the separator with an opened pouch. Optionally, the thresher pouch outlet is arranged vertically above the separator.

Optionally, the separator comprises a sieve configured to sieve the substance from the opened pouch.

Optionally, the sieve comprises a filter for supporting the opened pouch thereupon and the separator comprises a collector for collecting the substance sieved from the opened pouch, wherein the filter is arranged above the collector. Optionally, the collector is a receptacle.

Optionally, the filter comprises a mesh, e.g. for supporting an opened pouch thereupon. Optionally, the mesh is substantially planar.

Optionally, the separator comprises a separated substance outlet.

Optionally, the separator comprises a separated pouch outlet.

Optionally, the sieve comprises a sieve vibrator configured to vibrate an opened pouch to facilitate separation of the substance therefrom.

Optionally, the sieve vibrator is configured to vibrate the filter so as to facilitate separation of the substance from an opened pouch supported thereupon.

Optionally, the separator comprises a separated substance outlet and wherein the sieve vibrator is configured to vibrate the collector so as to cause substance therewithin to move through the separated substance outlet of the separator.

Optionally, the filter comprises a filter channel and wherein the sieve vibrator is configured to vibrate the filter channel so as to cause an opened pouch supported, in use, thereupon to move along the filter channel, optionally towards, and optionally through, a separated pouch outlet of the separator.

Optionally, the collector comprises a collector channel and wherein the sieve vibrator is configured to vibrate the collector channel so as to cause separated substance, in use, therewithin to move along the collector channel, optionally towards, and optionally through, a separated substance outlet of the separator.

Optionally, the filter comprises a filter channel and wherein the filter channel is declined so as to cause an opened pouch supported, in use, thereupon to move partially or wholly under the effect of gravity along the filter channel, optionally towards, and optionally through, a separated pouch outlet of the separator.

Optionally, the collector comprises a collector channel and wherein the collector channel is declined so as to cause, in use, separated substance therewithin to move partially or wholly under the effect of gravity along the collector channel, optionally towards, and optionally through, a separated substance outlet of the separator.

Optionally, the apparatus further comprises a shaker configured to shake the enclosed pouch prior to the opener so as to re-distribute the substance within the enclosed pouch. Optionally, the feeder comprises the shaker.

Optionally, the shaker comprises an outlet arranged to supply the feeder with an enclosed pouch once the enclosed pouch has been shaken by the shaker.

In accordance with some embodiments described herein, there is provided a method for mechanically separating a substance from an enclosed pouch containing the substance, the method comprising:
opening an enclosed pouch containing the substance so as to provide an opened pouch for the release of the substance therefrom; and
separating the substance from the opened pouch.

Optionally, the step of opening the enclosed pouch comprises cutting the enclosed pouch.

Optionally, the step of cutting the enclosed pouch comprises the step of cutting the enclosed pouch longitudinally.

Optionally, the method further comprises the step of feeding an enclosed pouch containing the substance into a cutter and wherein the step of cutting the enclosed pouch is performed by the cutter.

Optionally, the step of cutting the enclosed pouch is performed by a cutting blade and wherein the step of feeding comprises aligning the enclosed pouch with respect to the cutting blade so as to cause the cutting blade to longitudinally cut the enclosed pouch.

Optionally, the step of opening the enclosed pouch comprises rupturing the enclosed pouch, optionally threshing the enclosed pouch.

Optionally, the method further comprises the step of feeding an enclosed pouch containing a substance into a thresher and wherein the step of rupturing the enclosed pouch is performed by the thresher.

Optionally, the method further comprises, before the step of opening the enclosed pouch, shaking the enclosed pouch so as to redistribute the substance within the enclosed pouch.

Optionally, the step of separating the substance comprises vibrating the opened pouch.

Optionally, the step of separating the substance comprises sieving the substance from the opened pouch with a sieve.

Optionally, the sieve comprises a filter for supporting an opened pouch thereupon, the filter being arranged above a collector for collecting substance sieved from the opened pouch and, optionally, wherein separating the substance comprises vibrating the filter.

Optionally, the step of vibrating the filter comprises vibrating the filter so as to cause an opened pouch thereupon to move towards a separated pouch outlet of a separator.

Optionally, separating the substance comprises vibrating the collector so as to cause collected substance within the collector to pass through a separated substance outlet of a separator.

### Brief Description of the Drawings

Embodiments of the invention will now be described, by way of example only, with reference to the accompanying drawings, in which:
Figure 1 is a schematic side view of a first embodiment of an apparatus for mechanically separating a substance from an enclosed pouch containing the substance according to the present invention;
Figure 2 is a schematic plan view of the embodiment of Figure 1;
Figure 3 is a perspective view of the cutter and a feeder of the embodiment of Figure 1;

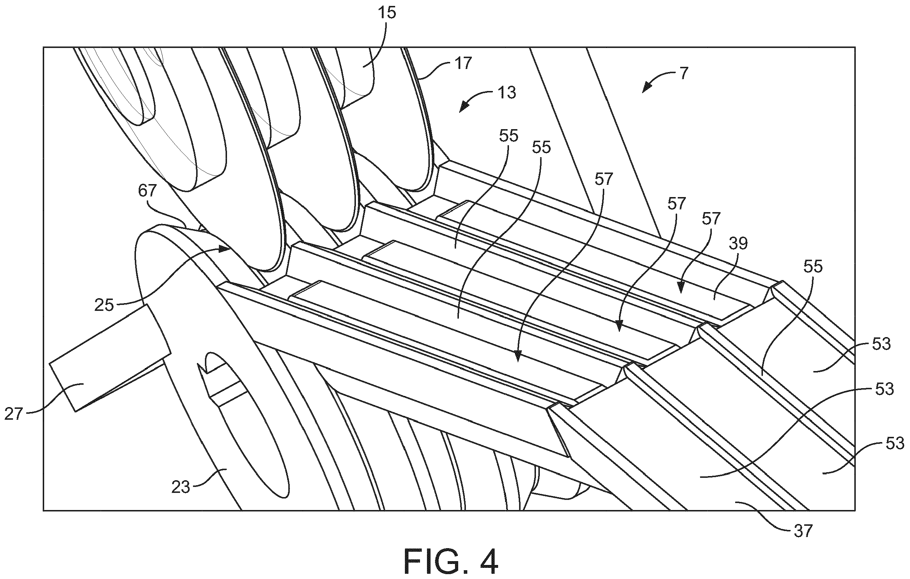

Figure 4 is a perspective close-up view of the cutter of the embodiment of Figure 1;
Figure 5 is a further perspective close-up view of the cutter of the embodiment of Figure 1;
Figure 6 is a further perspective close-up of the cutter of the embodiment of Figure 1, showing pouches passing under cutter discs and being longitudinally cut open by the cutter discs;
Figure 7 is a schematic side view of the separator of the embodiment of Figure 1;
Figure 8 is a perspective view of a second embodiment of an apparatus for mechanically separating a substance from an enclosed pouch containing the substance according to the present invention;
Figure 9 is a side view of the embodiment of Figure 8; and
Figure 10 is a schematic cross-sectional side view of the thresher of the embodiment of Figure 8, showing the movement of the thresher blades and how the thresher blades intersect the path of the pouches as they are fed into, and fall through, the thresher.

### Detailed description

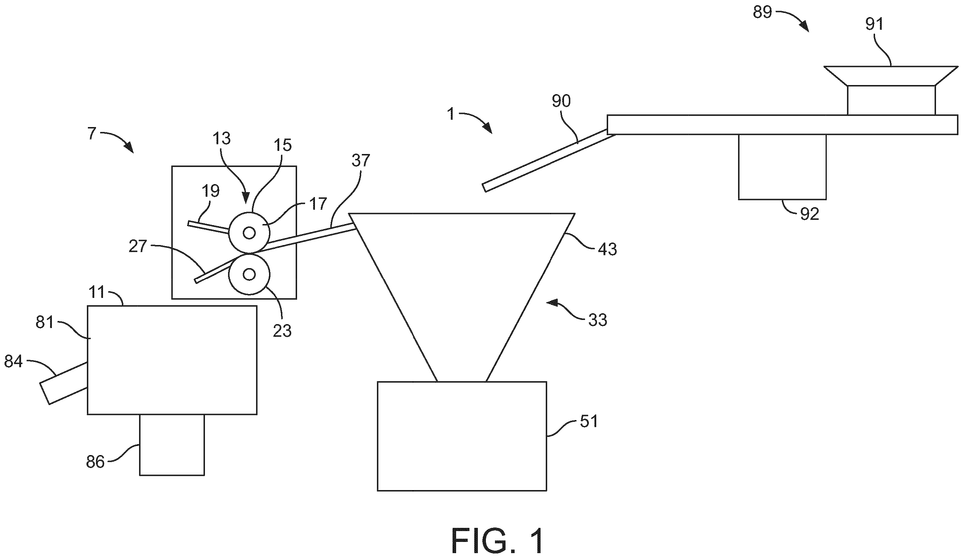

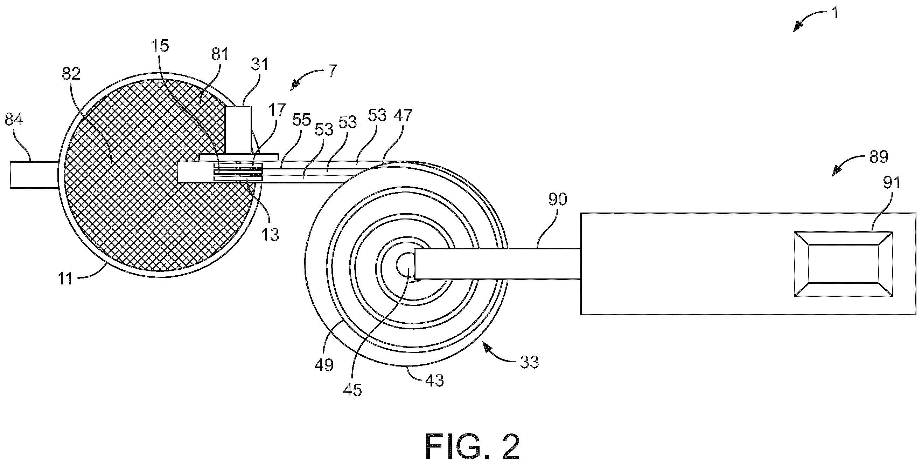

With reference to Figures 1 and 2, a first embodiment of an apparatus 1 for mechanically separating a substance from an enclosed pouch containing the substance according to the present invention is shown.

The apparatus 1 comprises: a shaker 89 for shaking enclosed pouches containing a substance (such as a powder, for example nicotine powder, or an aerosol generating material, such as nicotine) prior to opening the pouches; a feeder 33 for feeding the pouches to the opener 7; an opener 7 which in this embodiment comprises a cutter 13; and a separator for separating the contents of the enclosed pouches (e.g. a substance contained within the enclosed pouches) from the pouches once they have been opened by the opener 7.

The shaker 89 comprises a hopper 91 for supplying enclosed pouches to the shaker 89. As the pouches enter the hopper 91, they fall onto a declined shaker surface 95 within the shaker 89. A shaker vibrator 92 shakes, or vibrates, a shaker surface 95 upon which the enclosed pouches are supported. The shaking of the pouches in this way is advantageous as it causes the contents of the pouches to be redistributed within the pouches and this facilitates the separation of the substance within the pouches from the pouches after they have been opened by the opener 7. The shaking of the shaker surface 95 by the shaker vibrator 92 also causes the enclosed pouches to move along the surface 95 until they reach shaker outlet 90 which in this embodiment comprises a chute 90 along which the enclosed pouches slide until they fall into a feeder 43 arranged below the chute 90. Thus, the shaker 89 supplies the feeder 33 with an enclosed pouch after the enclosed pouch has been shaken by the shaker 89. The shaker vibrator 92 can be any suitable means for shaking or vibrating the surface 95, for example the shaker vibrator 92 could be a shaker motor with an off-centred, or otherwise unbalanced mass, mounted to a motor shaft thereof.

The feeder 33 is configured to feed the enclosed pouches to the opener 33. In this embodiment, the feeder 33 comprises a feed bowl 43 comprising a feed bowl base 45, a feed bowl exit 47, and a helical inclined surface 49 (defining a feed path) extending from the feed bowl base 45 to the feed bowl exit 47. After the enclosed pouches fall from the chute 90 of the shaker 89 into the feed bowl base 45, the enclosed pouches are caused to be transported along the inclined surface to the feed bowl exit by the vibration of the feed bowl 43 provided by a feed bowl vibrator 51. As the pouches are transported along the helical inclined surface 49, the vibration provided by the feed bowl vibrator 51 also causes them to become longitudinally aligned with the helical inclined surface 49 as pouches which are not aligned simply fall back into the base 45 of the feed bowl 43 due to the vibration.

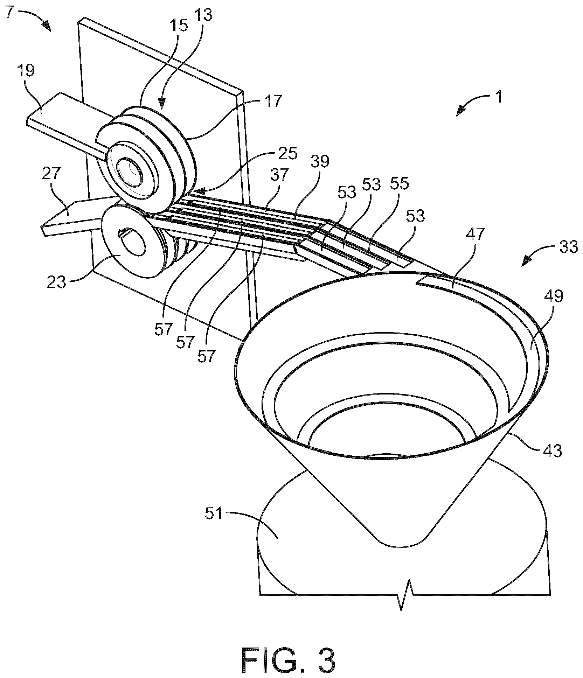

Once the enclosed pouches reach the feed bowl exit 47, they are conveyed along a conveyance path 37 which is configured to convey the enclosed pouches to the opener 7. As can be best seen in Fig. 3, in this embodiment, the conveyance path 37 comprises a plurality of separate conveyance paths 53, each sized so as to accept a single longitudinally-aligned enclosed pouch at a time, and each separated by a divider 55 which in this embodiment comprises a dividing wall 55. Thus, the width of each conveyance path 53 is less than the length of each pouch but wider than the width of each pouch. Each conveyance path 53 comprises a respective conveyance belt 57 which not only serves to convey the pouches to the opener 7 but also each respective conveyance belt 57 has a speed higher than the speed of pouches moving along each conveyance path 53 prior to the conveyance belt 57 such that the pouches are accelerated when the reach the conveyance belts 57. This acceleration increases the spacing between successive pouches of each conveyance path 53 which may improve the efficiency of the apparatus 1 by improving the cut applied to each of pouch and may reduce the chance of the opener 7 becoming jammed with pouches.

As previously mentioned, the conveyance path 37 conveys the pouches to the opener 7. In this embodiment, the cutter 13 is configured to cut each enclosed pouch longitudinally. It has been found that cutting the pouches longitudinally improves the efficiency of the separation of the substance from the pouches.

In this particular embodiment, the cutter 13 comprises a plurality of spaced-apart and adjacently-arranged rotatable cutting discs 15, each having a circumferentially extending cutting blade 17 and each aligned with a respective conveyance path 53. The opener 7 also comprises a roller 23 spaced apart from the plurality of cutting discs 15 so as to define respective cutting zones between the roller 23 and each cutting disc 15. The roller 23 comprises a plurality of V-shaped circumferentially-extending grooves 67 and the roller is arranged such that a circumferential portion, or segment, of each of the plurality of cutting discs 15 is provided within a respective groove 67 of the roller 23.

The rotatable cutting discs 15 are rotated by a drive 31. In this embodiment, the drive 31 comprises an electric motor 31 (Fig. 2) and the cutting discs 15 are mounted to a drive shaft of the electric motor 31. The drive 31 is configured to rotate each cutting disc 15 in the same direction as the direction of movement of the enclosed pouches past each cutting disc 15 and in some embodiments the enclosed pouches may be accelerated by the cutting discs 15 as they pass under the cutting discs 15 and as they are cut open by them.

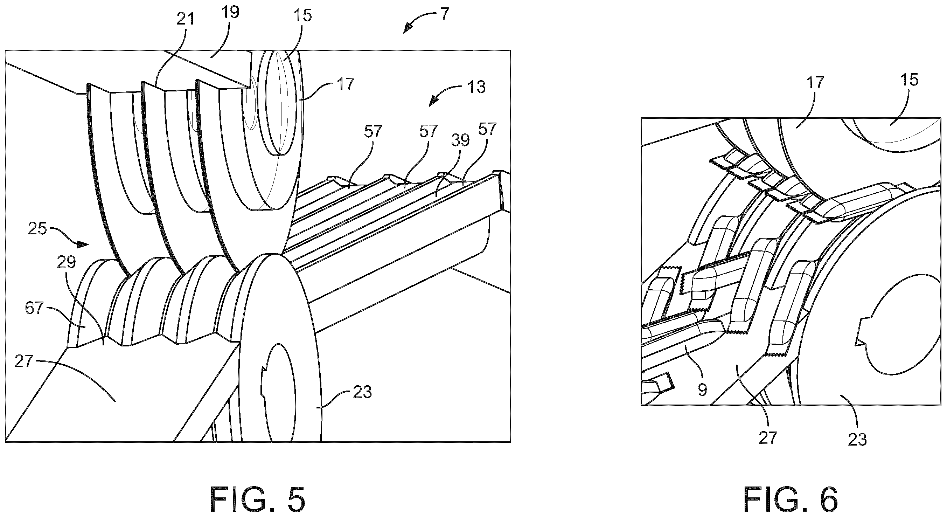

As best shown in Fig. 5, a cutting disc cleaner 19 is arranged downstream of the cutting discs 15 and comprises a plurality of slots 21 each configured to receive a circumferential portion, or segment of, a respective cutting disc 15. The slots 21 are sized so as to correspond with their respective segment of the cutting discs 15 so as to cause debris to be removed from, e.g. by scraping against, each of the cutting discs 15 upon rotation of the cutting discs 15.

As can also be see in Fig 5, in order to remove debris and/or opened pouches from the roller 23, a roller cleaner 27 is arranged downstream of the roller 23. The roller cleaner 27 comprises a plurality of V-shaped projections 29 each configured to correspond to a respective V-shaped groove 67 of the roller 23 and configured to be received therewithin so as to remove debris and/or opened pouches from the grooves 67 of the roller 23 upon rotation of the roller 23. In this embodiment the roller 23 is not driven directly but it instead is caused to rotate by the action of the pouches passing through the cutting zone between the cutting discs 15 and the roller 23. In other embodiments, the roller 23 is driven by the drive 31 of the cutting discs 15, for example by a belt drive or by a gear arrangement. The pouches passing between the cutting zone, being cut longitudinally by the cutting discs 15, and then being removed by the roller cleaner 27, is shown in Fig. 6.

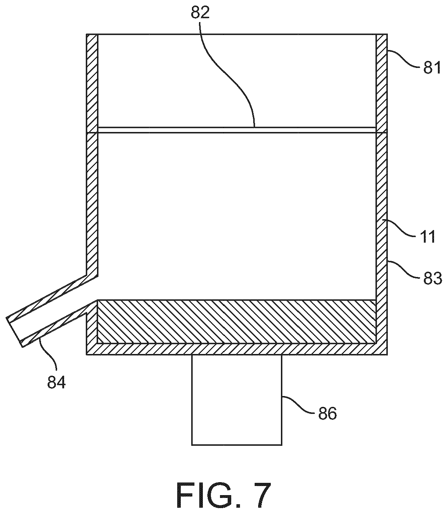

A separator 11, best shown in Fig. 7, receives the pouches after they have been cut open by the cutter 13. The separator 11 separates the opened pouches from the substance therewithin. In this embodiment, the separator 11 comprises a sieve 81 configured to sieve the substance from the opened pouches. The sieve 81 comprises a filter 82, which in this embodiment is a mesh, upon which the opened pouches are supported while they are being sieved. A sieve vibrator 86 vibrates the filter 82 so as to vibrate the open pouches supported thereupon so as to encourage or facilitate the extraction and separation of the substance from the opened pouches. A collector 83 is arranged below the sieve 81 so as to collect the substance as it is sieved from the opened pouches. The collector 83 comprises a separated substance outlet 84 through which separated substance passes. In this embodiment, the sieve vibrator 86 also vibrates the collector 83 so as to encourage the substance to pass through the separate substance outlet 84, although this is not essential. Also in this embodiment, the sieve 81 is removeable from the collector 83 so that the sieve 81 can periodically be emptied of opened pouches or cleaned as required but again this is not essential and any other suitable way of removing the opening pouches may instead be used, as will be appreciated by a person skilled in the art.

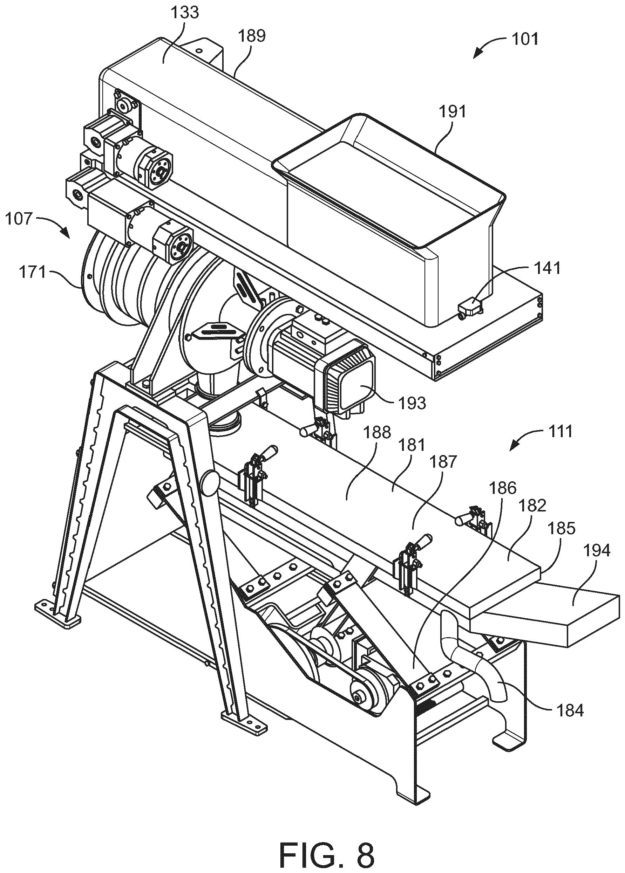

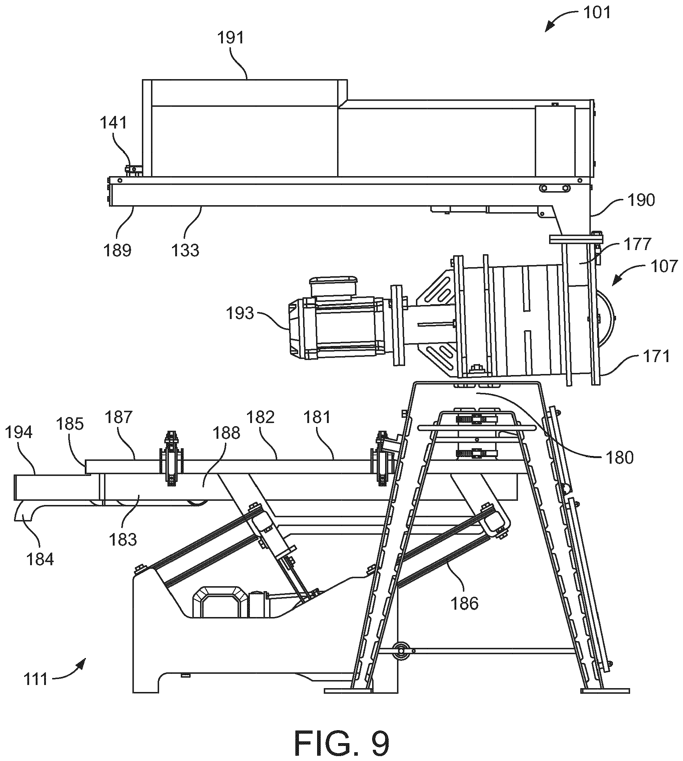

A second embodiment of an apparatus 101 for mechanically separating a substance from an enclosed pouch according to the present invention is shown in Figs 8 to 10. Features of the second embodiment corresponding to features of the first embodiment share corresponding reference numerals but the reference numerals of the second embodiment are increased by 100 as compared to the first embodiment.

Similar to the apparatus 1 of the first embodiment, the apparatus 101 of the second embodiment comprises a feeder 133 for feeding the enclosed pouches to the opener 107. In some embodiments, the feeder 133 may also comprise a vibrator 192 configured to shake the feeder 133. The vibrator 192 shakes the pouches within the feeder 133 in order to redistribute the substance within the enclosed pouches so as to facilitate the separation of the substance from the pouches after they have been opened by the opener 107. The vibrator 192 can be any suitable means for shaking or vibrating the feeder 133, for example the vibrator 192 could be a motor with an off-centred, or otherwise unbalanced mass, mounted to a motor shaft thereof. Thus, in these embodiments the feeder 133 may also be referred to as a shaker 189 as it performs both functions.

The feeder 133 comprises a hopper 191 for supplying enclosed pouches to the feeder 133. As the pouches enter the hopper 191, they fall onto a continuous conveyor belt (not shown) which conveys the pouches from the hopper 191 to a feeder outlet 190 which in this embodiment comprises a chute 190 along which the enclosed pouches move before falling into the opener 107.

The feeder 133 may also comprise a gate (not shown) which, in this embodiment comprises a height-adjustable wall which is arranged within the feeder 133 so as to control the rate of supply of pouches to the opener 107. In other embodiments the feeder 133 may comprise some other restriction for controlling the rate of supply of pouches to the opener 107. In other embodiments the gate may comprise a feed mechanism which may comprise one or more pushers for pushing the pouches through the feeder outlet 190. In one embodiment, the feed mechanism comprises a plurality of elongate pusher arms rotatable about a common axis and arranged substantially colinear with, and equiangularly spaced about, the common axis. A motor drives the rotation of the pusher arms in a direction for feeding the enclosed pouches through the outlet 190.

Whereas in the first embodiment the opener 7 comprises a cutter 13, in the second embodiment the opener 107 instead comprises a thresher 171 which, rather than cutting, or slicing, the pouches open, instead opens the enclosed pouches by beating them so as to cause them to rupture.

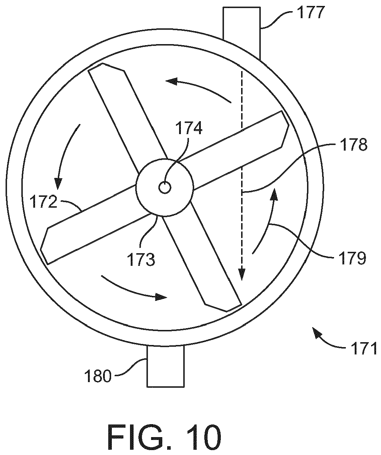

As can best be seen in Fig. 10, the thresher 171 comprises at least one rotatable arm 172, which in this embodiment comprises a blade 172, for beating the enclosed pouches open. In the embodiment shown, the thresher 171 comprises four equiangularly spaced rotatable arms 172, each comprising a blade 172. Each arm 172 is mounted to a rotor 173 of a motor 193 and so each arm 172 is driven by motor 193 so as to rotate about a rotational axis 174 of the rotor 173, although any other suitable drive for driving the rotational of the thresher arms 172 other than a motor 193 could instead be used.

As the enclosed pouches fall from the feeder outlet 190, they fall into the thresher 107 through a thresher pouch inlet 177 and fall through a pouch path 178 within the thresher 107. The pouch path 178 intersects the path of the thresher arms 172 as they rotate about rotor axis 174, thus causing the pouches to contact the thresher arms 182 as they rotate, causing the pouches to be beaten by the thresher arms 182 and thereby causing the enclosed pouches to rupture. Once opened in this way, the pouches then fall through a thresher pouch outlet 180 which is arranged above a separator 111.

The separator 111 receives the pouches after they have been ruptured by the thresher 107. The separator 111 separates the opened pouches from the substance therewithin. The separator 111 comprises a sieve 181 configured to sieve the substance from the opened pouches. The sieve 181 comprises a filter 182, which in this embodiment comprises a mesh, upon which the opened pouches are supported while they are being sieved. In this embodiment, the filter 182 comprises a filter channel 187, or filter path 187, along which the opened pouches move as they are being sieved. The filter 182 may in some embodiments comprise a declined surface such that the pouches move along the filter path 187 at least partially under the effect of gravity.

As in the previous embodiment, the separator 111 comprises a sieve vibrator 187 which vibrates the filter 182 so as to vibrate the open pouches supported on the filter 182. This vibration encourages or facilitates the extraction and separation of the substance from the opened pouches but also encourages the pouches in moving along the filter path 187 and towards a pouch outlet 185 of the separator 111. After the pouches reach the pouch outlet 185, they fall into a tray 194 for periodic collection and removal by an operator.

A collector 183, provided in this embodiment as a tray, is arranged below the filter 182 so as to collect the substance as it is sieved from the opened pouches and as it passes through the mesh of the filter 182. The collector 183 comprises a collector channel 188 defining a collector path 188 along which the separated substance moves until it reaches and passes through a separated substance outlet 184 of the collector 183. The collector 183 may in some embodiments comprise a declined surface such that the pouches move along the collector path 188 at least partially under the effect of gravity. In some embodiments, the filter 187 may comprise a similarly declined surface.

As in the first embodiment, the sieve vibrator 186 also vibrates the collector 183 so as to encourage the substance to move along the collector channel 188, or collector path 188, and through the separated substance outlet 184, although vibration of the collector 183 in this way is not essential.

The sieve 181 is removeable from the collector 183 so that the sieve 181 can be periodically emptied of opened pouches, or so that it may be cleaned, as required but again this is not essential and any other suitable way of removing the opened pouches or of cleaning the filter 187, may instead be used, as will be appreciated by a person skilled in the art. In this embodiment the filter 187 is clamped to the collector 183 by a plurality of hand clamps 196.

While the separator 11 of the first embodiment and the separator 111 of the second embodiment are different, they may be used interchangeably.

In some embodiments the feeder 133 may comprise a controller (not shown) and a sensor 141 in communication with the controller. The sensor 141 may be configured to detect or determine a parameter associated with the supply of enclosed pouches within the feeder 133, such as at least one of the presence, weight and/or volume of the enclosed pouches within the feeder 133, or the height of a pile of enclosed pouches within the feeder 133, for example at the gate or restriction, or the sensor 141 may be configured to detect or determine the rate of supply of pouches fed to the opener 107. The controller may be configured to control the gate, or the feed mechanism, accordingly so as to control the rate of supply of pouches fed to the opener 107. In embodiments, the controller may be configured to control the thresher motor 193 based on the detected or determined parameter, for example the controller may be configured to start or stop the thresher motor 193 when the detected or determined parameter falls below or exceeds a predetermined value. A similar sensor may be used in the first embodiment in which it may be configured to control the drive 31 of the cutting discs 15, for example to start or stop the rotation of the cutting discs 15 when the detected or determined parameter falls below or exceeds a predetermined value.

The various embodiments described herein are presented only to assist in understanding and teaching the claimed features. These embodiments are provided as a representative sample of embodiments only, and are not exhaustive and/or exclusive. It is to be understood that advantages, embodiments, examples, functions, features, structures, and/or other aspects described herein are not to be considered limitations on the scope of the invention as defined by the claims or limitations on equivalents to the claims, and that other embodiments may be utilised and modifications may be made without departing from the scope of the claimed invention. Various embodiments of the invention may suitably comprise, consist of, or consist essentially of, appropriate combinations of the disclosed elements, components, features, parts, steps, means, etc., other than those specifically described herein. In addition, this disclosure may include other inventions not presently claimed, but which may be claimed in future.

## Claims

1. An apparatus for mechanically separating a substance from an enclosed pouch containing the substance, the apparatus comprising:
an opener configured to open the enclosed pouch so as to provide an opened pouch for the release of the substance therefrom; and
a separator configured to separate the substance from the opened pouch.

2. The apparatus of Claim 1, wherein the opener is a cutter configured to cut the enclosed pouch, optionally wherein the cutter is configured to cut the enclosed pouch longitudinally, optionally wherein the cutter comprises a rotatable cutting disc comprising a circumferentially extending cutting blade, optionally wherein the apparatus further comprises a cutting disc cleaner, wherein the cutting disc cleaner comprises a slot and wherein the cutting disc cleaner is arranged such that a circumferential portion of the cutting disc is provided within the slot so as to cause debris to be removed from the cutting disc upon rotation of the cutting disc, optionally wherein the cutter further comprises a roller spaced apart from the cutting disc so as to define a cutting zone therebetween, optionally wherein the apparatus further comprises a roller cleaner configured to remove debris and/or opened pouches from the roller, optionally wherein the apparatus further comprises a drive for driving the rotation of the cutting disc.

3. The apparatus of Claim 1 or 2, wherein the apparatus further comprises a feeder configured to feed the enclosed pouch to the opener, optionally wherein the feeder comprises a gate or restriction for controlling the feed of enclosed pouches to the opener, optionally wherein the feeder comprises a conveyance path configured to convey the enclosed pouch to the opener, optionally wherein the feeder comprises a sensor configured to detect the presence, weight, height and/or volume of enclosed pouches fed by the feeder and wherein the sensor is operably connected to a controller configured to the control the drive based on the detected presence, weight, height and/or volume, optionally wherein the controller is configured to cause the drive to drive the rotation of the cutting disc when the detected presence, weight, height and/or volume exceeds a predetermined value, optionally wherein the feeder comprises a feed bowl comprising a feed bowl base, a feed bowl exit, a helical inclined surface extending from the feed bowl base to the feed bowl exit, and wherein the feeder comprises a feed bowl vibrator configured to vibrate the feed bowl so as to cause the enclosed pouch to be transported along the inclined surface to the feed bowl exit, optionally wherein the conveyance path is configured to longitudinally align the enclosed pouch with respect to the cutting blade, optionally wherein the drive is configured to rotate the cutting disc in the same direction as the direction of movement of the enclosed pouch past the cutting disc, optionally wherein the conveyance path is configured to receive an enclosed pouch from the feed bowl exit, optionally wherein the conveyance path comprises a plurality of separate conveyance paths, optionally wherein the cutter comprises a plurality of cutting blades wherein each of the plurality of cutting blades is aligned with a respective conveyance path, optionally wherein the each of the plurality of cutting blades comprises a plurality of rotatable cutting discs, optionally wherein the apparatus further comprises a cutting disc cleaner comprising a plurality of slots and wherein the cutting disc cleaner is arranged such that a circumferential portion of each of the cutting discs is received within a respective slot so as to cause debris to be removed from each of the cutting discs upon rotation of each respective cutting disc, optionally wherein the apparatus comprises a roller spaced apart from the plurality of cutting discs so as to define respective cutting zones therebetween, optionally wherein the apparatus further comprises a roller cleaner configured to remove debris and/or opened pouches from the roller.

4. The apparatus of any preceding claim, wherein the opener is a thresher, the thresher comprising a thresher blade configured to rupture the enclosed pouch, optionally wherein the thresher comprises a rotor and wherein the thresher blade is configured to rotate about a rotor rotational axis, optionally wherein the rotor comprises a plurality of such thresher blades, optionally wherein the thresher comprises a drive configured to drive the rotation of the rotor.

5. The apparatus of Claim 4, wherein the thresher comprises a pouch inlet arranged above the thresher blade(s) such that a pouch path extends from the pouch inlet into the thresher and intersects with a path of the thresher blade(s), optionally wherein the thresher comprises a thresher pouch outlet for supplying the separator with an opened pouch.

6. The apparatus of any preceding claim, wherein the separator comprises a sieve configured to sieve the substance from the opened pouch.

7. The apparatus of Claim 6, wherein the sieve comprises a filter for supporting the opened pouch thereupon and the separator further comprises a collector for collecting the substance sieved from the opened pouch, wherein the filter is arranged above the collector, optionally wherein the filter comprises a mesh.

8. The apparatus of Claim 6 or 7, wherein the sieve comprises a sieve vibrator configured to vibrate an opened pouch to facilitate separation of the substance therefrom, optionally wherein the sieve vibrator is configured to vibrate the filter so as to facilitate separation of the substance from an opened pouch supported thereupon, optionally wherein the sieve vibrator is configured to vibrate the collector so as to cause the substance therewithin to move through the separated substance outlet of the separator, optionally wherein the filter comprises a filter channel and wherein the sieve vibrator is configured to vibrate the filter channel so as to cause an opened pouch supported, in use, thereupon to move along the filter channel, optionally wherein the collector comprises a collector channel and wherein the sieve vibrator is configured to vibrate the collector channel so as to cause separated substance, in use, therewithin to move along the collector channel.

9. The apparatus of Claim 7 or 8, wherein the filter comprises a filter channel and wherein the filter channel is declined so as to cause an opened pouch supported, in use, thereupon to move partially or wholly under the effect of gravity along the filter channel.

10. The apparatus of any one of Claims 7 to 9, wherein the collector comprises a collector channel and wherein the collector channel is declined so as to cause, in use, separated substance therewithin to move partially or wholly under the effect of gravity along the collector channel.

11. The apparatus of any preceding claim, wherein the apparatus further comprises a shaker configured to shake the enclosed pouch prior to the opener so as to re-distribute the substance within the enclosed pouch, optionally wherein the shaker comprises an outlet arranged to supply the feeder with an enclosed pouch once the enclosed pouch has been shaken by the shaker.

12. A method for mechanically separating a substance from an enclosed pouch containing the substance, the method comprising:
opening an enclosed pouch containing the substance so as to provide an opened pouch for the release of the substance therefrom; and
separating the substance from the opened pouch.

13. The method of Claim 12, wherein the step of opening the enclosed pouch comprises cutting the enclosed pouch, optionally wherein the step of cutting the enclosed pouch comprises the step of cutting the enclosed pouch longitudinally, optionally wherein the method further comprises the step of feeding an enclosed pouch containing the substance into a cutter and wherein the step of cutting the enclosed pouch is performed by the cutter, optionally wherein the step of cutting the enclosed pouch is performed by a cutting blade and wherein the step of feeding comprises aligning the enclosed pouch with respect to the cutting blade so as to cause the cutting blade to longitudinally cut the enclosed pouch.

14. The method of Claim 12 or 13, wherein the step of opening the enclosed pouch comprises rupturing the enclosed pouch, optionally wherein the method further comprises the step of feeding an enclosed pouch containing a substance into a thresher and wherein the step of rupturing the enclosed pouch is performed by the thresher.

15. The method of any one of Claims 12 to 14, wherein the method further comprises, before the step of opening the enclosed pouch, shaking the enclosed pouch so as to redistribute the substance within the enclosed pouch, optionally wherein separating the substance comprises vibrating the opened pouch, optionally wherein separating the substance comprises sieving the substance from the opened pouch with a sieve, optionally wherein the sieve comprises a filter for supporting an opened pouch thereupon, the filter being arranged above a collector for collecting substance sieved from the opened pouch and wherein separating the substance comprises vibrating the filter, optionally wherein the step of vibrating the filter comprises vibrating the filter so as to cause an opened pouch thereupon to move towards a separated pouch outlet of a separator, optionally wherein separating the substance comprises vibrating the collector so as to cause collected substance within the collector to pass through a separated substance outlet of a separator.
